# EUROPEAN PATENT APPLICATION

(11) **EP 1 199 782 A2**
(43) Date of publication of application: **24.04.2002**
(21) Application number: 01308785.3
(22) Date of filing: 16.10.2001
(51) Int. Cl.: H02H 3/00

(54) **Separation of protection and automation functions in a protective relay for power systems**

(30) Priority: 20.10.2000 US 693237
(71) Applicant: Schweitzer Engineering Laboratories, Inc., Pullmann, Washington 98163 (US)
(72) Inventor: Schweitzer III, Edmundo, Pullman, Washington 99163 (US)
(74) Representative: Faulkner, Thomas John

(57) **Abstract**

The system includes separate sections in a single relay-type apparatus for protection logic equations (12) and automation logic equations (14). The two sections are accessible by different passwords (16, 18), to maintain separation and autonomy between the two sets of logic equations. The results of the propection logic equations are stored in a protection information portion (20) of a system database (22), while the results of the automation logic equations are stored in an automation information portion (28) of the system database. Output equations are responsive to the result information to control output settings for the apparatus. The protection result information is available to the automation logic equations but can only be changed by the protection logic equations. Similarly, the automation result information is available to the protection logic equations but can only be changed by the automation logic equations. Both protection and automation sections have access to certain system information in the database, such as voltage and current quantities.

## Description

### Technical Field

This invention relates generally to protection and automation control functions for power systems, and more particularly concerns a system for providing separation between the protection and automation functions in a single apparatus.

### Background of the Invention

Power system substations typically include both protection and automation and control equipment and capability. Protection functions, typically implemented by various protective relays, identify and respond to faults on the power line by using voltage and current quantities obtained from the power line and processing those quantities with selected algorithms, involving the use of logic equations, to provide output control signals which, if necessary, interrupt the power by means of tripping signals. It is important to very quickly and accurately identify fault conditions, to distinguish true fault conditions from load or other system conditions, and to respond appropriately, providing a tripping signal for a circuit breaker if necessary. Such action is time-critical for proper operation of a power system.

Automation control functions, on the other hand, are concerned with proper functioning (operation) of a substation, including integration of its operation with the overall power system. Automation often involves exchange of information with supervisory devices but is not as critical time-wise as protection functions. Automation, in one example, involves the configuration of a substation bus. Substations include motor-operated switches, as well as circuit breakers, which may be opened or closed to achieve particular system configurations for delivery of power to the various feeders leaving the substation. System automation includes interlocking functions which prevent the power system from using operator-initiated settings which would result in improper or dangerous bus configurations. Another example of automation is in the control (switching in/out) of various combinations of elements in the system, including for example, capacitor banks. Automation thus concerns generally substation configuration and arrangements, as well as communication with the other portions of the power system. Proper automation control requires information from more than one location within the overall power system.

The automation functions and control are typically implemented with a programmable logic controller (PLC) which has a programming ability but also some significant limitations. These limitations include lack of complete access to the status of protection elements. To include a complete access capability would require a large number of contact inputs and outputs in both the protection device and the PLC.

In many cases, the protection and automation functions are accomplished by two separate, autonomous devices. Historically, this autonomy has been deemed to be desirable, because the protection and automation functions and the engineers/technicians who deal with them deal with quite different system issues and requirements. Automation efforts typically require more complex and customized logic equations to accomplish its tasks than protection efforts, while protection efforts are more focused on obtaining the required protection for the power line, with appropriate settings, and are hence more autonomous than automation efforts. Accurate protection is typically more critical to the overall system, because of the necessity of monitoring system safety and the need for fast response to system conditions. However, increased cost is incurred with two completely separate systems, as well as system inefficiency because some system data, such as voltage and current quantities obtained from the power line, are used by both protection and automation systems.

Accordingly, it would be desirable to have a single system for both protection and automation control, while maintaining the autonomy and separation between the specific control portions (logic equations) of the protection and automation functions, as well as separate output contact control in some cases.

### Disclosure of the Invention

Accordingly, the present invention is a system for maintaining separation of protection and automation functions present in a single apparatus such as a protective relay, used for an electric power system, comprising: a single apparatus which carries out protection and automation functions for a power system; a first section of logic equations within the apparatus, accessible by a first password, for defining and performing selected protection determinations for the power system, wherein the logic equations present in the first section may be modified by a user having the first password; a second section of logic equations within the apparatus, accessible by a second password which is different than the first password, for defining and performing selected automation actions for the power system, wherein the logic equations in the second section may be modified by a user having the second password; a shared database within the apparatus which contains the results of the operation of the protection and automation logic equations and output logic equations in the apparatus responsive to the results of the protection and automation logic equations to set outputs of the apparatus.

### Brief Description of the Drawing

The figure shows a block diagram showing the arrangement of the combined system of the present invention.

### Best Mode for Carrying Out the Invention

The figure is a block diagram of the system of the present invention, generally referred to at 10. System 10 forms a portion of a protective relay, which is typically located in a substation and is used to protect the operation of the power system. Protective relays vary widely in their specific purpose and capability within the power system.

The system of the present invention permits the protection functions of the relay, which are controlled by logic equations, to be modified, *i*.*e*. customized, by certain users of the relay as well as permitting other users of the relay to customize the automation functionality at the substation and its system. Both protection and automation functions are accomplished by logic control equations and those functions can be modified to fit a user's particular requirements by modification of the appropriate protection and/or automation logic control equations. While the term "logic equations" is used throughout the description, it should be understood that algorithms may be used instead of logic equations, depending on the particular protective relay and its capability and other system considerations. Hence, the term "logic equations" herein should be considered to include algorithms and equivalent mathematical operations.

With respect to protection, a logic equation will be used to define and control the review of the condition of particular elements (such as circuit breaker status) as well as processing voltage and current values from the power line. These equations will be carried out on a regular periodic basis (e.g. 16 times per power system cycle) and will produce particular results. If the results fall within certain ranges, output contacts may be set and signals generated to, for instance, trip a circuit breaker. Logic equations are also used to carry out automation functions and requirements, including system configuration requirements, such as discussed above.

In the embodiment shown, the protection logic equations and algorithms 12 are stored in one area in the relay, while the automation logic equations and algorithms 14 are stored in a separate area. Both sets of logic equations may be modified by trained engineers/technicians, including modifications carried out at the substation or at remote locations by means of a communication network. However, access to the protection logic equations 12 and the automation logic equations 14 are by separate, different passwords. The use of separate storage areas for the two sets of logic equations and/or algorithms, accessible by separate passwords, provides the desired autonomy for the two systems. Protection engineers will have the correct password to access the protection logic equations, while the automation engineers will have the correct password to access the automation logic equations. This separate accessing capability is shown by user password lines 16 and 18. Those personnel who wish to access both sets of logic equations must have both passwords.

The results of the protection logic equations are stored in a first area 20 within a system database referred to at 22. Two-way access (line 24) is provided between the protection logic equations and the stored results in area 20 of database 22. This means that the logic equations can write results to area 20, and can also obtain information from that area. The protection logic equations 12 can change the information in area 20. The automation logic equations can obtain the information in area 20 via a read capability, shown by line 26, but cannot change or provide information to that area.

Similarly, the results of the automation logic equations are provided to an automation area 28 in the system database 22. This again involves two-way communication between the automation logic equations 14 and database area 28, via communication line 29. The protection logic equations 12 can obtain information from database area 28 via line 31, but does not have the capability to write any information to that area or change any information in that area. The protection and automation database areas, while functionally separate, are part of the single, common system database 22, thus promoting efficiency and speed of operation.

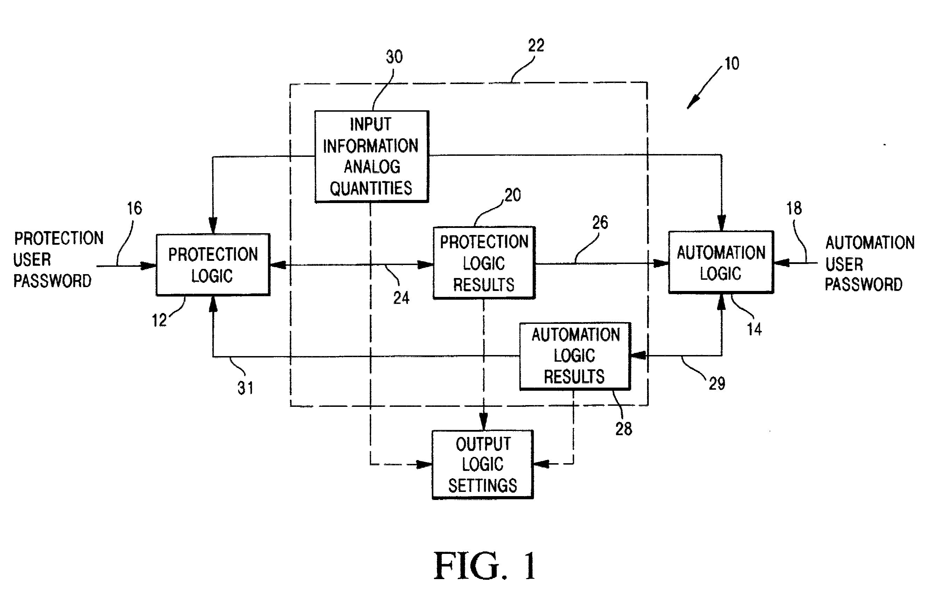

Both the protection and automation logic equations do have access to system information area 30, also in database 22. System information area 30 includes analog information, such as voltages and currents which are periodically obtained from the power line, as well as other system control bits, etc., which may be applicable to both the automation and protection logic equations. As indicated in Figure 1, all three information areas 20, 28 and 30 are contained within the system database 22. It is important that both protection and automation logic equations have access to system information area 30. For instance, both protection and automation functions can use reactive power information. Protection uses reactive power information for various purposes, including breaker failure determination, while automation uses the same information to control the configuration of capacitor banks in the system. In another example, protection uses current values from the power line for over-current protection, while automation uses the same information for the interlocking function described above.

The system of the present invention further includes an output logic equations/settings area, which responds to the information in data areas 20, 28 and 30 to configure the relay output contacts. The output contacts provide control signals which result in certain actions, such as tripping a circuit breaker, etc. The output logic equations/settings, which process the results from the protection and automation logic equations, are programmable and hence can be altered by either protection engineers or automation engineers. These output contacts can be completely separate, if desired, or the respective engineers can collaborate/consult to use a single set of output contacts.

Accordingly, a system has been disclosed by which protection and automation functions can be set and controlled by separate sets of logic equations stored in different areas of a single apparatus, such as a protective relay, which thus improves overall operational efficiency, while maintaining separate, autonomous access for the two sets of logic equations.

Although a preferred embodiment of the invention has been disclosed here for purposes of illustration, it should be understood that various changes, modifications and substitutions may be incorporated without departing from the spirit of the invention, which is defined by the claims which follow.

## Claims

1. A system for maintaining separation of protection and automation functions in a single apparatus for an electric power system, comprising:
a single apparatus for carrying out protection and automation functions for a power system;
a first section of logic equations within the apparatus, accessible by a first password, for defining and performing selected protection determinations for the power system, wherein the logic equations in said first section may be modified by a user having the first password;
a second section of logic equations within the apparatus, accessible by a second password which is different than the first password, for defining and performing selected automation actions for the power system, wherein the logic equations in the second section may be modified by a user having the second password;
a shared database within the apparatus containing the results of operations of the protection and automation logic equations; and
output logic equations in the apparatus responsive to the results of the protection and automation logic equations to set outputs of the apparatus.

2. A system of claim 1, including separate sets of outputs for protection and automation results.

3. A system of claim 1, including a shared set of outputs for protection and automation results.

4. A system of claim 1, wherein the shared database includes selected power system information which is available to both the protection and automation logic equations.

5. A system of claim 4, wherein the selected power system information includes power signal currents and voltages.

6. A system of claim 1, wherein the protection logic equation results are available to the automation logic equations, but cannot be changed by the automation logic equations, and wherein the automation logic equation results are available to the protection logic equations, but cannot be changed by the protection logic equations.

7. A system of claim 1, wherein the output equations are carried out within the protection logic equation section.
